# EUROPEAN PATENT APPLICATION

(11) **EP 4 810 865 A1**
(43) Date of publication of application: **23.09.2026**
(21) Application number: 24917298.2
(22) Date of filing: 29.11.2024
(51) Int. Cl.: F24F 11/46, F24F 11/63, F24F 11/56, F24F 11/86, F24F 11/77, G06N 20/00, F24F 110/10, F24F 140/60

(54) **AIR CONDITIONER AND METHOD FOR CONTROLLING AIR CONDITIONER**

(30) Priority: 08.01.2024 KR 20240003215
(71) Applicant: Samsung Electronics Co., Ltd., Suwon-si, Gyeonggi-do 16677 (KR)
(72) Inventor: KIM, Sookyung, Suwon-si Gyeonggi-do 16677 (KR); HAN, Yerim, Suwon-si Gyeonggi-do 16677 (KR); HAN, Cholok, Suwon-si Gyeonggi-do 16677 (KR); KIM, Kyungjae, Suwon-si Gyeonggi-do 16677 (KR); SONG, Kwanwoo, Suwon-si Gyeonggi-do 16677 (KR)
(74) Representative: Gulde & Partner
(86) International application number: PCT/KR2024/019220
(87) International publication number: WO 2025/150701

(57) **Abstract**

An air conditioner includes: a main body including an outlet; a heat exchanger; a compressor configured to compress a refrigerant supplied from the heat exchanger; a fan configured to blow air that exchanges heat in the heat exchanger to the outlet; a first sensor configured to collect indoor environmental data; a second sensor configured to collect outdoor environmental data; and at least one processor configured to control the compressor and the fan to perform an air conditioning operation based on a set temperature, wherein, during the air conditioning operation in an eco mode, the at least one processor is configured to: determine a recommended temperature based on the indoor environmental data, the outdoor environmental data, and the set temperature; transmit information about the recommended temperature to an external device based on an indoor temperature corresponding to the indoor environmental data reaching the set temperature; change the set temperature to the recommended temperature based on receiving a command to select the recommended temperature from the external device; based on receiving a command to end the eco mode, determine a recommended operation duration of the air conditioning operation based on the indoor environmental data, the outdoor environmental data, the set temperature, and a desired restart time of the air conditioning operation after an end of the air conditioning operation, the desired restart time being set by a user; and transmit information about the recommended operation duration of the air conditioning operation to the external device.

## Description

### [Technical Field]

The disclosure relates to an air conditioner performing an air conditioning operation in an eco mode, and a method for controlling the air conditioner.

### [Background Art]

In general, an air conditioner may refer to an apparatus that cools or heats air using transfer of heat generated in a process of evaporating and condensing a refrigerant and may condition air of an indoor space by discharging the cooled or heated air.

The air conditioner may circulate a refrigerant and draw in indoor air by rotating a fan disposed around an indoor heat exchanger in the cooling operation or heating operation. The air conditioner may cause the drawn air to exchange heat in the indoor heat exchanger and may discharge the heat-exchanged air to the indoor space.

Related air conditioners perform an air conditioning operation according to a set temperature regardless of power consumption, resulting in inefficient energy efficiency usage.

### [Disclosure]

### [Technical Problem]

One or more embodiments provide an air conditioner that may control a set temperature in consideration of indoor and outdoor environments, and a method for controlling the air conditioner.

### [Technical Solution]

According to an aspect of the disclosure, an air conditioner may include: a main body including an outlet; a heat exchanger; a compressor configured to compress a refrigerant supplied from the heat exchanger; a fan configured to blow air that exchanges heat in the heat exchanger to the outlet; a first sensor configured to collect indoor environmental data; a second sensor configured to collect outdoor environmental data; and at least one processor configured to control the compressor and the fan to perform an air conditioning operation based on a set temperature. During the air conditioning operation in an eco mode, the at least one processor may be configured to: determine a recommended temperature based on the indoor environmental data, the outdoor environmental data, and the set temperature; transmit information about the recommended temperature to an external device based on an indoor temperature corresponding to the indoor environmental data reaching the set temperature; change the set temperature to the recommended temperature based on receiving a command to select the recommended temperature from the external device; based on receiving a command to end the eco mode, determine a recommended operation duration of the air conditioning operation based on the indoor environmental data, the outdoor environmental data, the set temperature, and a desired restart time of the air conditioning operation after an end of the air conditioning operation, the desired restart time being set by a user; and transmit information about the recommended operation duration of the air conditioning operation to the external device.

According to an aspect of the disclosure, a method for controlling an air conditioner may include: collecting indoor environmental data; collecting outdoor environmental data; during an air conditioning operation in an eco mode, determining a recommended temperature based on the indoor environmental data, the outdoor environmental data, and a set temperature; transmitting information about the recommended temperature to an external device based on an indoor temperature corresponding to the indoor environmental data reaching the set temperature; changing the set temperature to the recommended temperature based on receiving a command to select the recommended temperature; based on receiving a command to end the eco mode, determining a recommended operation duration of the air conditioning operation based on the indoor environmental data, the outdoor environmental data, the set temperature, and a desired restart time of the air conditioning operation after an end of the air conditioning operation, the desired restart time being set by a user; and transmitting information about the recommended operation duration of the air conditioning operation to the external device.

### [Advantageous Effects]

According to one or more embodiments, power consumption due to air conditioning operation may be reduced.

According to one or more embodiments, power consumption may be reduced by controlling an air conditioning operation duration and an air conditioning restart duration.

According to one or more embodiments, a comfortable indoor environment may be provided to a user by controlling a set temperature in consideration of not only an indoor environment, but also an outdoor environment.

The effects that may be achieved by the disclosure are not limited to the above-mentioned effects, and other effects not mentioned will be clearly understood by one of ordinary skill in the technical art to which the disclosure belongs from the following description.

### [Description of Drawings]

FIG. 1 is a diagram illustrating a control system of an air conditioner according to an embodiment.
FIG. 2 illustrates a refrigerant circulation circuit of an air conditioning system according to an embodiment.
FIG. 3 illustrates an external appearance of an air conditioner according to an embodiment.
FIG. 4 is an exploded view of an air conditioner according to an embodiment.
FIG. 5 illustrates an air conditioner with an outlet open according to an embodiment.
FIG. 6 is a cross-sectional view taken along A-A' of FIG. 4.
FIG. 7 illustrates an air conditioner with an outlet closed according to an embodiment.
FIG. 8 is a cross-sectional view taken along line B-B' of FIG. 6.
FIG. 9 is a control block diagram of an air conditioner according to an embodiment.
FIG. 10 is a block diagram illustrating an example of obtaining various types of information using a machine learning model of an air conditioner according to an embodiment.
FIG. 11 is a flowchart illustrating an example of controlling an air conditioning operation during an eco mode of an air conditioner according to an embodiment.
FIG. 12 illustrates an example of an interface for activating an eco mode of an air conditioner according to an embodiment.
FIG. 13 illustrates an example of an interface for changing a set temperature during an air conditioning operation in an eco mode according to an embodiment.
FIG. 14 is a flowchart illustrating an example of controlling an air conditioning operation when an eco mode of an air conditioner ends according to an embodiment.
FIG. 15 illustrates an example method for obtaining a recommended operation duration of an air conditioning operation according to an embodiment.
FIG. 16 illustrates an example of an interface for determining whether to maintain an air conditioning operation according to an embodiment.
FIG. 17 illustrates an example of an interface for determining whether to restart an air conditioning operation according to an embodiment.

### [Modes of the Invention]

Various embodiments of the disclosure and terms used herein are not intended to limit the technical features described herein to specific embodiments, and should be understood to include various modifications, equivalents, or substitutions of the corresponding embodiments.

In describing of the drawings, similar reference numerals may be used for similar or related elements.

The singular form of a noun corresponding to an item may include one or more of the items unless clearly indicated otherwise in a related context.

In the disclosure, phrases, such as "A or B", "at least one of A and B", "at least one of A or B", "A, B or C", "at least one of A, B and C", and "at least one of A, B, or C" may include any one or all possible combinations of the items listed together in the corresponding phrase among the phrases.

As used herein, the term "and/or" includes any and all combinations of one or more of the associated listed items.

Terms such as "portion", "module", and "member" may be embodied as hardware or software. According to embodiments, a plurality of "portion", "module", and "member" may be implemented as a single component or a single "portion", "module", and "member" may include a plurality of components.

Terms such as "1st", "2nd", "primary", or "secondary" may be used simply to distinguish an element from other elements, without limiting the element in other aspects (e.g., importance or order).

When an element (e.g., a first element) is referred to as being "(functionally or communicatively) coupled" or "connected" to another element (e.g., a second element), the first element may be connected to the second element, directly (e.g., wired), wirelessly, or through a third element.

It will be understood that when the terms "includes", "comprises", "including", and/or "comprising" are used in the disclosure, they specify the presence of the specified features, figures, steps, operations, components, members, or combinations thereof, but do not preclude the presence or addition of one or more other features, figures, steps, operations, components, members, or combinations thereof.

When a given element is referred to as being "connected to", "coupled to", "supported by" or "in contact with" another element, it is to be understood that it may be directly or indirectly connected to, coupled to, supported by, or in contact with the other element. When a given element is indirectly connected to, coupled to, supported by, or in contact with another element, it is to be understood that it may be connected to, coupled to, supported by, or in contact with the other element through a third element.

It will also be understood that when an element is referred to as being "on" another element, it may be directly on the other element or intervening elements may also be present.

The terms "front", "rear", "left", "right", "upper", and "lower" used in the following description are defined based on the drawings, and the shape and location of each component are not limited by these terms. For example, the front side may be defined as the +X side and the rear side may be defined as the - X side. For example, based on the drawings, the right side may be defined as the +Y side and the left side may be defined as the -Y side. For example, based on the drawings, the upper side may be defined as the +Z side and the lower side may be defined as the -Z side.

Hereinafter, embodiments of the disclosure will be described in detail with reference to accompanying drawings.

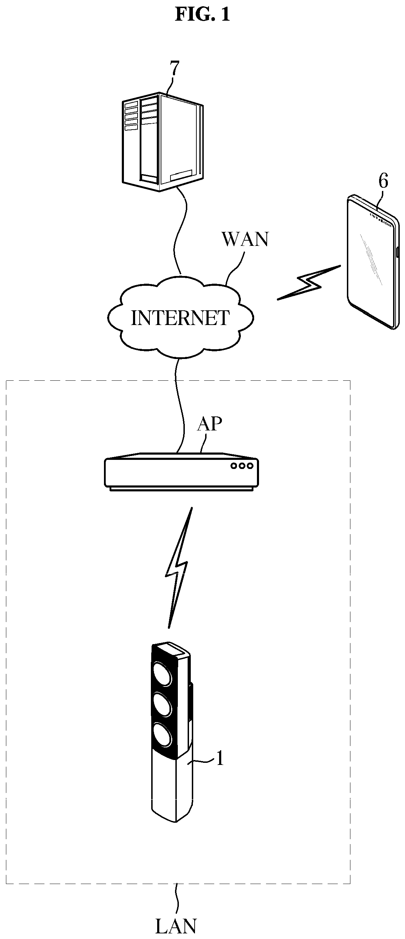

FIG. 1 is a diagram illustrating a control system of an air conditioner according to an embodiment.

Referring to FIG. 1, a control system of an air conditioner according to an embodiment may include an air conditioner 1, a user device 6, and/or a computing device 7.

The air conditioner 1 may include a communication interface capable of communicating with the user device 6 and/or the computing device 7, a user interface device that receives a user input or outputs various types of information, at least one processor that controls an operation of the air conditioner 1, and at least one memory in which a program for controlling the operation of the air conditioner 1 is stored.

The computing device 7 may include a server device.

The computing device 7 may include a communication interface communicating with the air conditioner 1 and/or the user device 6. The computing device 7 may include at least one processor processing data received from the air conditioner 1, another computing device (another server device), and/or the user device 6, and at least one memory storing a program for processing data or processed data. The computing device 7 may be implemented as various computing devices, such as a workstation, a cloud, a data drive, a data station, and the like. The computing device 7 may be implemented as one or more servers physically or logically separated based on a function, a detailed configuration of a function, or data, may transmit and receive data through communication between the servers, and may process the transmitted and received data.

The computing device 7 may perform functions, such as storing and/or managing a user account, registering the air conditioner 1 and/or the user device 6 in association with the user account, and managing or controlling the registered air conditioner 1 and/or user device 6. For example, a user may access the computing device 7 through the user device 6, and may create a user account. The user account may be identified by an identifier (ID) and a password set by the user. The user may access the computing device 7 through the user device 6 and manage the user account. The computing device 7 may register the air conditioner 1 and/or the user device 6 with the user account according to a predetermined procedure. For example, the computing device 7 may link identification information of the air conditioner 1, (e.g., a serial number or a MAC address) to the user account to register, manage, and control the air conditioner 1. Similarly, the computing device 7 may register and control the user device 6 with the user account.

According to various embodiments, the computing device 7 may include a plurality of servers.

For example, the computing device 7 may include a first server device and a second server device. The first server device may create and/or manage user account information, and register and/or manage information of the air conditioner 1 and/or the user device 6 in the user account information. The second server device may receive registration information of the air conditioner 1 and/or the user device 6 from the first server and control the air conditioner 1 and/or the user device 6.

As another example, the second server device may manage the air conditioner 1 and/or the user device 6 registered in the first server device on behalf of the first server device.

The number of the computing devices 7 is not limited thereto, and the computing device 7 may include a plurality of servers for performing the same operation and/or different operations.

The user device 6 may include a communication interface communicating with the air conditioner 1 and/or the computing device 7. The user device 6 may include a user interface device that receives a user input or outputs information to a user. The user device 6 may include at least one processor that controls an operation of the user device 6, and at least one memory in which a program for controlling the operation of the user device 6 is stored.

The user device 6 may be carried by a user, or placed in a user's home or office, or the like. The user device 6 may include a personal computer (PC), a terminal, a mobile phone, a smartphone, a handheld device, a wearable device, a display device, and the like, but is not limited thereto.

In an embodiment, the user device 6 may include a remote controller remotely controlling the air conditioner 1. The remote controller may include various interfaces for controlling or setting the air conditioner 1. In an embodiment, in a case where the user device 6 corresponds to a remote controller configured to remotely control the air conditioner 1, the air conditioner 1 and the user device 6 may perform direct communication.

The memory of the user device 6 may store a program for controlling the air conditioner 1 and/or the computing device 7, i.e., an application. The application may be sold installed on the user device 6, or may be downloaded from an external server for installation.

By running the application installed on the user device 6 by a user, the user may access the computing device 7, create a user account, and communicate with the computing device 7 based on the login user account to register the air conditioner 1 with the computing device 7.

For example, by operating the air conditioner 1 to allow the air conditioner 1 to access the computing device 7 according to a procedure guided by the application installed on the user device 6, the computing device 7 may register the air conditioner 1 with the user account by assigning identification information (e.g., a serial number or a MAC address) of the air conditioner 1 to the corresponding user account. It is understood that information required to register a device, such as the air conditioner 1, with the user account may include other information for identifying the device in addition to the serial number or the MAC address of the device.

A user may control the air conditioner 1 using the application installed on the user device 6. For example, by logging into a user account with the application installed on the user device 6, a visual indicator representing the air conditioner 1 registered in the user account may appear. When a control command for the air conditioner 1 is input through the user device 6, the user device 6 may deliver the control command to the air conditioner 1 through the computing device 7.

The user device 6 may receive various types of information through the computing device 7 or directly from the air conditioner 1 registered in the user account.

A network may include both a wired network and a wireless network. The wired network may include a cable network or a telephone network, and the wireless network may include any networks transmitting and receiving a signal via radio waves. The wired network and the wireless network may be interconnected.

The network may include a wide area network (WAN), such as the Internet, a local area network (LAN) formed around an access point (AP), and a short-range wireless network that does not use an AP. The short-range wireless network may include Bluetooth (IEEE 802.15.1), Zigbee (IEEE 802.15.4), Wi-Fi Direct, near field communication (NFC), Z-Wave, and the like, but is not limited thereto.

The access point (AP) may connect the air conditioner 1 and/or the user device 6 to a WAN to which the computing device 7 is connected. The air conditioner 1 and/or the user device 6 may be connected to the computing device 7 via a WAN.

The AP may communicate with the air conditioner 1 and/or the user device 6 using wireless communication, such as Wi-Fi (IEEE 802.11), Bluetooth (IEEE 802.15.1), Zigbee (IEEE 802.15.4), and the like, and access a WAN using wired communication, but the wireless communication method of the AP is not limited thereto.

According to various embodiments, the air conditioner 1 may be directly connected to the user device 6 and/or the computing device 7 without going through an AP.

The air conditioner 1 may be connected to the user device 6 and/or the computing device 7 via a long-range wireless network or a short-range wireless network.

For example, the air conditioner 1 may be connected to the user device 6 via a short-range wireless network (e.g., Wi-Fi Direct or Bluetooth). As another example, the air conditioner 1 may be connected to the user device 6 and/or the computing device 7 via a WAN using a long-range wireless network (e.g., a cellular communication module).

The air conditioner 1 may transmit information about an operation or a state of the air conditioner 1 to the user device 6 and/or the computing device 7 via the network. For example, the air conditioner 1 may transmit information about an operation or a state to the user device 6 and/or the computing device 7 upon receiving a request from the user device 6 and/or the computing device 7, in response to an event in the air conditioner 1, and/or periodically or in real time.

Upon receiving the information about the operation or the state from the air conditioner 1, the computing device 7 may update the stored information about the operation or the state of the air conditioner 1 and transmit the updated information about the operation and/or the state of the air conditioner 1 to the user device 6 via the network. Here, updating the information may include various operations in which existing information is changed, such as adding new information to the existing information, replacing the existing information with new information, and the like.

Information about the operation and/or the state of the air conditioner 1 may include information related to an operation of the air conditioner 1.

For example, the information related to the operation of the air conditioner 1 may include information about an operation start time and an operation end time of the air conditioner 1.

Information about the operation and/or the state of the air conditioner 1 may include information collected by at least one sensor provided in the air conditioner 1.

For example, the information about the operation and/or the state of the air conditioner 1 may include humidity information and/or temperature information of surrounding air.

The air conditioner 1 may obtain various types of information from the user device 6 and/or the computing device 7, and may provide the obtained information to a user. For example, the air conditioner 1 may obtain information related to a function of the air conditioner 1 and information about various environmental information (e.g., weather, temperature, humidity, etc.), from the computing device 7, and may output the obtained information through the user interface device.

The air conditioner 1 may receive electrical signals corresponding to various notifications from the user device 6 and/or the computing device 7, and may provide a notification corresponding to the electrical signal to a user.

The user device 6 may receive electrical signals corresponding to various notifications from the air conditioner 1 and/or the computing device 7, and may provide a notification corresponding to the electrical signal to a user.

The air conditioner 1 may operate in accordance with a control command received from the user device 6 and/or the computing device 7. For example, the air conditioner 1 may operate in accordance with a control command received from the computing device 7 based on a prior authorization obtained from a user to operate in accordance with the control command of the computing device 7 even without a user input through the user device 6. Here, the control command received from the computing device 7 may include a control command input by the user through the user device 6 or a control command based on preset conditions, but is not limited thereto.

The user device 6 may transmit information about a user to the air conditioner 1 and/or the computing device 7 via the communication interface. For example, the user device 6 may transmit information about a user's location, a user's health condition, a user's preference, a user's schedule, and the like to the computing device 7. The user device 6 may transmit information about the user to the computing device 7 based on the user's prior authorization.

In an embodiment, the user device 6 may transmit a setting related to the air conditioner 1 (e.g., a setting of a drying operation) to the air conditioner 1 and/or the computing device 7 via the communication interface.

The air conditioner 1, the user device 6, and/or the computing device 7 may use techniques, such as artificial intelligence (AI) to determine a control command. For example, the computing device 7 may process information about an operation or a state of the air conditioner 1 and information about a user of the user device 6 using AI technology, and may transmit a processing result or a control command to the air conditioner 1 and/or the user device 6 based on the processing result.

FIG. 1 is a diagram illustrating an example in which the air conditioner 1, the user device 6, and/or the computing device 7 exchange information and/or control commands with each other in the control system of the air conditioner according to an embodiment. A communication method of the air conditioner 1, the user device 6, and/or the computing device 7 or examples of information transmitted from the air conditioner 1, the user device 6, and/or the computing device 7 are not limited to the above description.

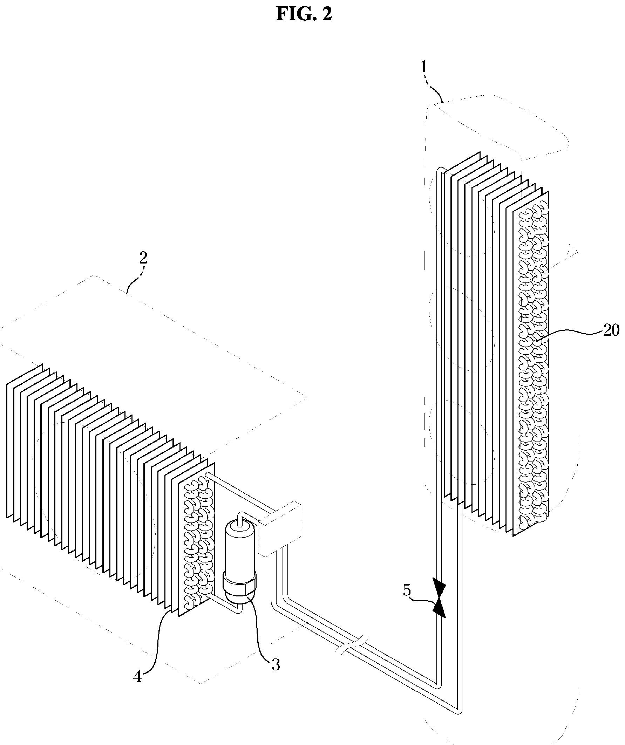

FIG. 2 illustrates a refrigerant circulation circuit of an air conditioning system according to an embodiment.

Referring to FIG. 2, an air conditioning system includes the air conditioner 1 and an outdoor unit 2. The air conditioner 1 may also be referred to as an indoor unit in that the air conditioner 1 is located in an indoor space requiring air conditioning (air conditioning space). The air conditioner 1 may be installed in a space separated from the outside by walls or partitions, such as an indoor space of a house or an office.

The indoor unit may be classified into a ceiling-type indoor unit, a stand-type indoor unit, a wall-mounted indoor unit, and the like according to the arrangement method of the indoor unit. However, for convenience of description, a stand-type indoor unit will be described below.

The outdoor unit 2 may be located outside the air conditioning space. For example, the outdoor unit 2 may be installed outdoors.

The air conditioning system includes a refrigerant flow path for circulating a refrigerant between indoors and outdoors. The refrigerant may be circulated between indoors and outdoors along the refrigerant flow path, and may absorb heat or emit latent heat during a state change (e.g., a state change from gas to liquid or from liquid to gas).

To induce the state change of the refrigerant, a refrigerant circulator may include a compressor 3, an outdoor heat exchanger 4, an expansion valve 5, and an indoor heat exchanger 20.

The compressor 3 compresses the gaseous refrigerant, causing the refrigerant to be heated. The high-temperature and high-pressure gaseous refrigerant may be delivered to the outdoor heat exchanger 4 by the compressor 3. In the outdoor heat exchanger 4, the high-temperature and high-pressure gaseous refrigerant is converted from the gas state to a liquid state, and also emits heat. The refrigerant in the liquid state may be delivered to the expansion valve 5. The expansion valve 5 may decompress the refrigerant in the liquid state, causing the refrigerant to be cooled. The low-temperature and low-pressure liquid refrigerant may be delivered to the indoor heat exchanger 20. In the indoor heat exchanger 20, the low-temperature and low-pressure liquid refrigerant is converted from the liquid state to the gas state, and also absorbs heat.

As such, the refrigerant may emit heat in the outdoor heat exchanger 4 and absorb heat in the indoor heat exchanger 20. The indoor heat exchanger 20 may be installed in the air conditioner 1 along with the expansion valve 5, and the outdoor heat exchanger 4 may be installed in the outdoor unit 2 along with the compressor 3. Accordingly, the indoor heat exchanger 20 may cool air in the air conditioning space (indoors).

Hereinafter, for convenience of description, the indoor heat exchanger 20 is referred to as a 'heat exchanger 20'. In addition, components of the outdoor unit 2 may also be components of the air conditioner 1, and the air conditioner 1 may include both the indoor unit 1 and the outdoor unit 2.

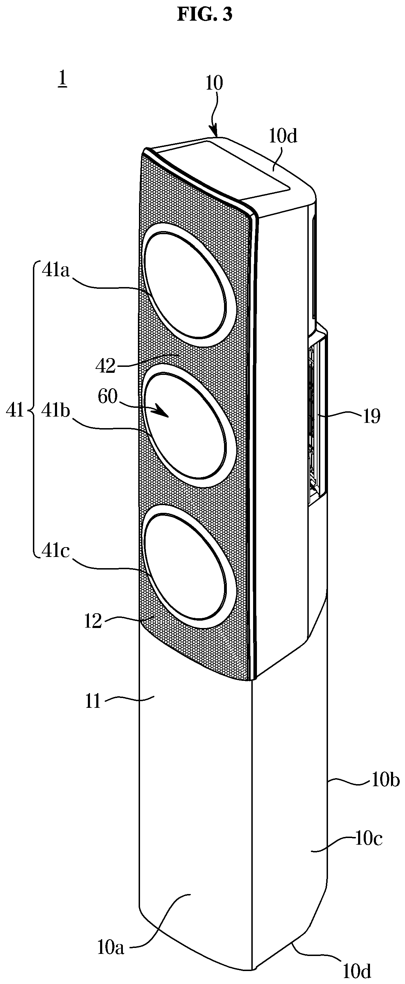

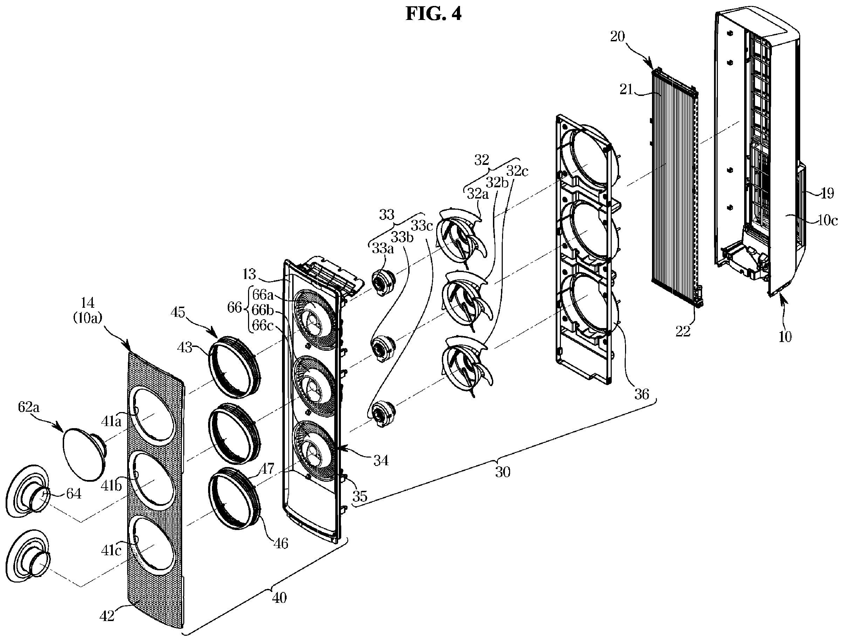

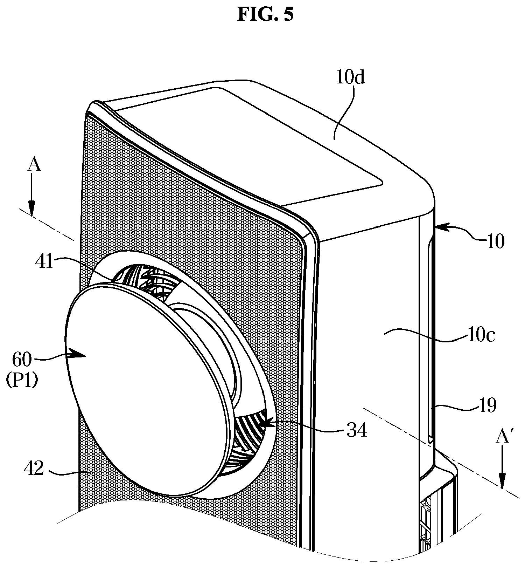

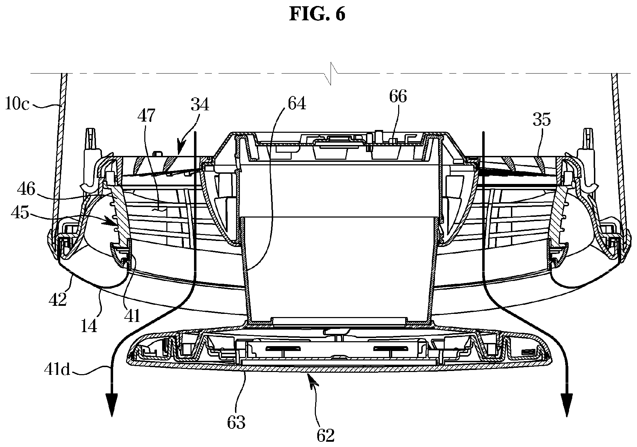

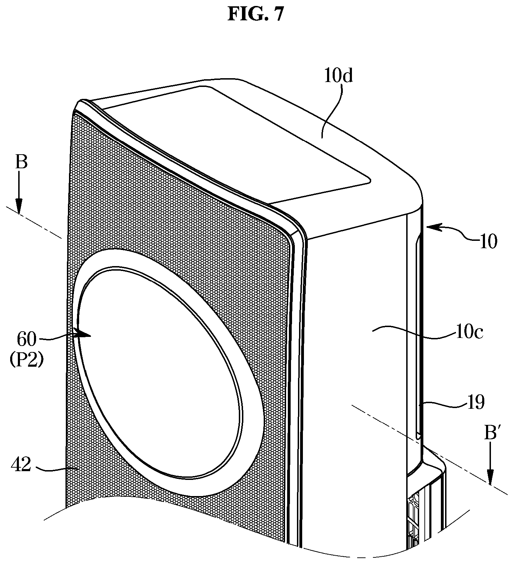

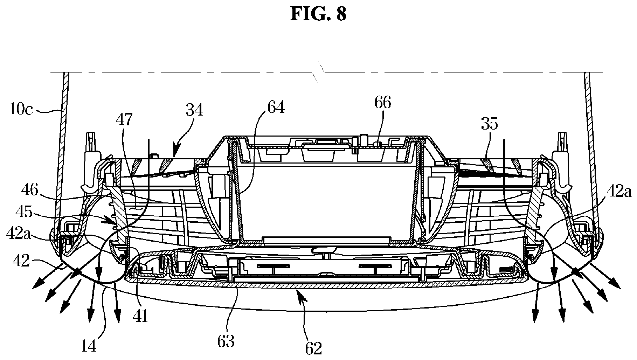

FIG. 3 illustrates an external appearance of an air conditioner according to an embodiment. FIG. 4 is an exploded view of an air conditioner according to an embodiment. FIG. 5 illustrates an air conditioner with an outlet open according to an embodiment. FIG. 6 is a cross-sectional view taken along A-A' of FIG. 5. FIG. 7 illustrates an air conditioner with an outlet closed according to an embodiment. FIG. 8 is a cross-sectional view taken along line B-B' of FIG. 7.

Referring to FIGS. 3, 4, 5, 6, 7, and 8, the air conditioner 1 may include a main body 10 having at least one outlet 41, the heat exchanger 20 for exchanging heat with air brought into the main body 10, an air blower 30 for circulating air into or out of the main body 10, and a discharger 40 that discharges air blown from the air blower 30 to the outside of the main body 10.

The main body 10 may include a front panel 10a in which at least one outlet 41 is formed, a rear panel 10b arranged behind the front panel 10a, a side panel 10c arranged between the front panel 10a and the rear panel 10b, and upper/lower panel 10d arranged on top and bottom of the side panel 10c. The at least one outlet 41 is shaped like a circle, and at least two of them may be spaced apart from each other in an up and down direction of the front panel 10a. For example, the outlet 41 may include a first outlet 41a, a second outlet 41b, and a third outlet 41c.

An inlet 19 for drawing outside air into the main body 10 may be formed on the rear panel 10b.

The inlet 19 is formed on the rear panel 10b disposed behind the heat exchanger 20 to guide air outside the main body 10 to flow into the main body 10. Air introduced into the main body 10 through the inlet 19 absorbs or loses heat while passing through the heat exchanger 20. Air that has exchanged heat while passing through the heat exchanger 20 may be discharged out of the main body 10 by the air blower 30 through the discharger 40.

The air blower 30 may include a fan 32 and a grille 34.

The grille 34 may be arranged in a discharging direction of the fan 32. In an embodiment, the fan 32 employs a mixed flow fan, but the type of the fan 32 is not limited thereto and the fan 32 may have any structure that moves the air brought in from outside of the main body 10 to be discharged back to the outside of the main body 10. For example, the fan 32 may be a cross fan, a turbo fan, or a sirocco fan. The number of the fans 32 is not limited, and in an embodiment, at least one fan 32 may be provided to correspond to at least one outlet 41. For example, the fan 32 may include a first fan 32a, a second fan 32b, and a third fan 32c.

The air blower 30 may be equipped with a fan motor 33 arranged in the middle of the fan 32 to drive the fan 32. For example, the fan motor 33 may include a first fan motor 33a for driving the first fan 32a, a second fan motor 33b for driving the second fan 32b, and a third fan motor 33c for driving the third fan 32c. The fan motor 33 may include a motor capable of speed control. For example, the fan motor 33 may be a brushless direct current (BLDC) motor.

In the disclosure, controlling the fan 32 may include controlling the fan motor 33.

The grille 34 may be arranged in front of the fan 32 to guide air flow. In addition, the grille 34 may also be arranged between the fan 32 and the outlet 41 to reduce external influences on the fan 32.

The grille 34 may include a plurality of wings 35. By controlling the number, shape and arrangement angle of the plurality of wings 35, the direction or volume of the air blown from the fan 32 to the outlet 41 may be controlled.

A door actuator 66, which will be described below, may be located in the middle of the grille 34. The door actuator 66 and the fan motor 33 may be arranged on the same line in a front-back direction. With this structure, the plurality of wings 35 of the grille 34 may be located in front of the fan 32.

The air blower 30 may include a duct 36. The duct 36 is shaped like a circle that encloses the fan 32 to guide the air flow to the fan 32.

The heat exchanger 20 may be arranged between the fan 32 and the inlet 19 to absorb heat from air introduced through the inlet 19 or deliver heat to the air introduced through the inlet 19. The heat exchanger 20 may include a tube 21, and headers 22 coupled to upper and lower sides of the tube 21. However, the type of the heat exchanger 20 is not limited thereto.

There may be at least one heat exchanger 20 arranged in the main body 10 to correspond to the number of the outlets 41. For example, the outlet 41 may include the first outlet 41a, the second outlet 41b, and the third outlet 41c.

The air conditioner 1 may perform a plurality of operations. The plurality of operations may include a cooling operation of discharging air that has exchanged heat through the outlet 41, and a drying operation of discharging air that has not exchanged heat through the outlet 41. The drying operation may also be referred to as an air blowing operation in that air that has not exchanged heat is discharged. According to various embodiments, the drying operation may include an air blowing operation in which only the fan 32 is operated without an operation of the compressor 3 and/or a heating operation in which the fan 32 is operated together with the operation of the compressor 3.

The drying operation may also be referred to as a cleaning operation in that occurrence of mold may be suppressed by removing moisture inside the air conditioner 1 (e.g., moisture around the heat exchanger 20).

In the heating operation, a flow of a refrigerant compressed by the compressor 3 may be controlled so that indoor air exchanges heat with a high-temperature refrigerant of the heat exchanger 20.

The flow of the refrigerant compressed by the compressor 3 may be changed by an operation of at least one valve (not shown) for changing the flow of the refrigerant. For example, a controller 160 may control the flow of the refrigerant compressed by the compressor 3 by controlling at least one valve, thereby performing the heating operation or the cooling operation.

In the cooling operation, when the compressor 3 operates, the fan 32 may rotate. In the cooling operation, the flow of the refrigerant compressed by the compressor 3 may be controlled so that indoor air exchanges heat with a cold refrigerant of the heat exchanger 20. In the drying operation, only the fan 32 may rotate without the operation of the compressor 3. In an embodiment, even in the drying operation, when the compressor 3 operates, the fan 32 may rotate. In the drying operation, the flow of the refrigerant compressed by the compressor 3 may be controlled so that indoor air exchanges heat with a hot refrigerant of the heat exchanger 20. That is, according to various embodiments, the drying operation may include the heating operation.

The cooling operation may include a first cooling operation that discharges, through the at least one outlet 41, air that has exchanged heat, and a second cooling operation that discharges, through discharge holes 42 formed at a porous discharge plate 14, air that has exchanged heat. The size of the outlet 41 may be larger than that of the discharge hole 42. In addition, the number of the discharge holes 42 is larger than the number of the outlets 41, and the discharge holes 42 may be substantially uniformly distributed across the discharge plate 14.

Specifically, in the first cooling operation, air that has exchanged heat may be discharged out of the air conditioner 1 through the first outlet 41a, the second outlet 41b, or the third outlet 41c that is opened. In this instance, the air conditioner 1 may perform the first cooling operation by selectively opening the first outlet 41a, the second outlet 41b, or the third outlet 41c depending on a detected indoor temperature.

In the second cooling operation, the first outlet 41a, the second outlet 41b, and the third outlet 41c are all closed, and air that has exchanged heat may be discharged through the discharge holes 42 formed at the discharge plate 14.

That is, air that has exchanged heat by the heat exchanger 20 may be discharged, by the fan 32, out of the air conditioner through the at least one outlet 41 and the discharge holes 42.

In the first cooling operation, air that has exchanged heat is discharged through the outlet 41, but a portion of the air may also be discharged through the discharge holes 42. That is, in the first cooling operation, most of the air that has exchanged heat may be discharged through the outlet 41. In the second cooling operation, as in the first cooling operation, most of the air that has exchanged heat may be discharged through the discharge holes 42.

Air that has passed the air blower 30 may be discharged out of the main body 10 through the outlet 41.

When the air conditioner 1 performs the first cooling operation, air that has exchanged heat may be discharged out of the main body 10 through the outlet 41. The outlet 41 is arranged for the air that has exchanged heat to be discharged directly to the outside. The outlet 41 may be arranged to be exposed to the outside of the main body 10. The outlet 41 may be arranged in the air blowing direction of the fan 32 to allow the air that has exchanged heat to be discharged directly to the outside. Air blown by the fan 32 may be moved through a first discharge path 41d formed between the fan 32 and the outlet 41. The first discharge path 41d may be formed by a discharge guide 45.

The first discharge path 41d may be formed by the discharge guide 45. An end 43 of the discharge guide 45 may be connected to the outlet 41, and the first discharge path 41d may be formed along the inner circumferential plane of the discharge guide 45. The end 43 of the discharge guide 45 may be exposed to the outside through the outlet 41 of the main body 10, and a door 60, which will be described below, may be settled (seated) at the end 43 of the discharge guide 45.

The outlet 41 may be opened and closed by the door 60.

The door 60 may open or close the outlet 41, and air that has exchanged heat may be selectively discharged out of the main body 10 through the outlet 41. For example, the door 60 may include a first door 60a that opens and closes the first outlet 41a, a second door 60b that opens and closes the second outlet 41b, and a third door 60c that opens and closes the third outlet 41c.

The door 60 may move between an open position P1 for opening the outlet 41 and a closed position P2 for closing the outlet 41. The door 60 may move between the open position P1 and the closed position P2 in the front-back direction.

Specifically, the door 60 may each include a door blade 62 and the door actuator 66 for operating the door blade 62.

The door blade 62 may be shaped like a circle to correspond to the shape of the outlet 41. The door blade 62 may be separated from the end 43 of the discharge guide 45 when the door 60 is in the open position P1, and the door blade 62 may close the outlet 41 by contacting the end 43 of the discharge guide 45 when the door 60 is in the closed position P2. For example, the door blade 62 may include a first door blade 62a that opens and closes the first outlet 41a, a second door blade 62b that opens and closes the second outlet 41b, and a third door blade 62c that opens and closes the first outlet 41a.

The door blade 62 may include a blade body 63 shaped like a circle to correspond to the outlet 41, and a blade coupler 64 extending from the blade body 63 and coupled to the door actuator 66.

The blade body 63 may be shaped substantially like a circular plate. In addition, the blade body 63 may be formed to have one side facing the outside of the main body 10 and the other side facing the outlet 41.

A display may be arranged on one side of the blade body 63, and the display may be configured to display an operating state of the air conditioner or to allow the air conditioner to be manipulated.

The door actuator 66 may move the door blade 62. The door actuator 66 may include a motor (not shown). The door actuator 66 may be coupled to the blade coupler 64 of the door blade 62 to move the door blade 62.

For example, the door actuator 66 may include a first door actuator 66a that moves the first door blade 62a, a second door actuator 66b that moves the second door blade 62b, and a third door actuator 66c that moves the third door blade 62c.

The grille 34 described above may be arranged around the door actuator 66. Air blown from the fan 32 arranged on the rear side of the grille 34 may be discharged forward past the grille 34.

When the air conditioner 1 performs the second cooling operation, air that has exchanged heat may be discharged out of the main body 10 through the discharge holes 42. With this structure, air that has exchanged heat may be discharged to the outside at a reduced wind speed. The discharge holes 42 may include a plurality of discharge holes 42 formed on the porous discharge plate 14, which will be described below.

When air that has exchanged heat is discharged out of the main body 10 through the discharge holes 42, air blown by the fan 32 may flow along a second discharge path 42a formed between the fan 32 and the discharge holes 42. The second discharge path 42a may be formed by the discharge guide 45 and a discharge panel 12 to be described below.

The discharge panel 12 may form the second discharge path 42a. Air that has exchanged heat is allowed to be discharged out of the air conditioner at low speed through the second discharge path 42a formed by the discharge panel 12 and the discharge plate 14 to be described below.

The discharge panel 12 may include a flow path forming frame 13 and the discharge plate 14.

The flow path forming frame 13 may separate the inside of the main body 10 from the second discharge path 42a. The flow path forming frame 13 may prevent the air that has exchanged heat from flowing back into the main body 10. In an embodiment, the flow path forming frame 13 may be formed by extending from the grille 34 and connected to an exterior panel 11.

The discharge holes 42 may be formed on the discharge plate 14. The shape of the discharge hole 42 is not limited, but in an embodiment of the disclosure, the discharge hole 42 may be formed in the plural. The discharge hole 42 may penetrate the front and rear sides of the discharge plate 14.

The discharge holes 42 may form a discharge area. The plurality of discharge holes 42 may be evenly distributed in the discharge area, or may be concentrated in at least a portion of the discharge area. In an embodiment, the plurality of discharge holes 42 may be evenly distributed in the discharge area.

The discharge area may be formed in at least a portion of the discharge plate 14. However, the discharge area is not limited thereto, and discharging may be made through the front side of the discharge plate 14.

The discharger 40 may include the first discharge path 41d and the second discharge path 42a.

Air blown by the fan 32 may flow through at least one of the first discharge path 41d or the second discharge path 42a.

In the first cooling operation, air blown by the fan 32 may flow along the first discharge path 41d formed between the fan 32 and the outlet 41. In addition, in the second cooling operation, air blown by the fan 32 may flow along the second discharge path 42a formed between the fan 32 and the discharge holes 42.

The discharger 40 may include the discharge guide 45. Air blown by the fan 32 may be controlled by the discharge guide 45. The discharge guide 45 may be disposed in front of the air blower 30 to allow the air moving from the air blower 30 may be moved along at least one of the first discharge path 41d or the second discharge path 42a.

The discharge guide 45 may include a guide body 46 and a guide groove 47.

The guide body 46 may form the first discharge path 41d inside. The guide body 46 may be formed in a cylindrical form with a cavity. Specifically, the guide body 46 is shaped like a tube with one end facing the air blower 30 and the other end facing the outlet 41.

The guide groove 47 may be formed for the second discharge path 42a to pass through. The guide groove 47 may be formed on the guide body 46. The shape of the guide groove 47 is not limited, and the guide groove 47 may have any form arranged on the guide body 46 to allow the air to be moved out of the guide body 46. In an embodiment, the guide groove 47 may be in the form of a plurality of holes along the edge of the guide body 46.

In the first cooling operation, the door 60 opens the outlet 41. In this case, air blown from the air blower 30 may pass the first discharge path 41d formed in the guide body 46 and be discharged through the outlet 41.

In the second cooling operation, the door 60 closes the outlet 41. In this case, one side of the guide body 46 is blocked by the door 60, and thus the air blown from the air blower 30 may be discharged through the discharge holes 42 past the guide groove 47 formed in the guide body 46.

Hereinafter, an example of an operation of the air conditioner 1 of the disclosure is described.

Air introduced into the main body 10 from outside exchanges heat with the heat exchanger 20. Air heated or cooled by the heat exchanger 20 may be discharged by the air blower 30 out of the main body 10.

The air conditioner 1 may discharge the air that has passed the heat exchanger 20 to the outside through at least one of the outlet 41 or the discharge holes 42. That is, discharging is made through the outlet 41, making the heating or the cooling performed quickly as in the first cooling operation, and discharging is made through the discharge holes 42, making the heating or the cooling performed slowly throughout the indoor space as in the second cooling operation.

The outlet 41 may be opened and closed by an operation of the door 60. Air that has exchanged heat may be discharged through the outlet 41 when the outlet 41 is opened, and the air that has exchanged heat may be discharged through the discharge holes 42 when the outlet 41 is closed.

In the first cooling operation, air that has exchanged heat may be discharged through the outlet 41. In the first cooling operation, the door blade 62 may be located in the open position P1, and the door blade 62 may be separated from the end 43 of the discharge guide 45 to open the outlet 41.

In this case, air blown from the air blower 30 may flow to the outlet 41 through the first discharge path 41d formed by the guide body 46 of the discharge guide 45.

In a case where air is discharged out of the main body 10 through the outlet 41, the air may be discharged to the outside at a constant wind speed set by the air blower 30.

In the second cooling operation, air that has exchanged heat may be discharged through the discharge holes 42. In the second cooling operation, the door blade 62 may be located in the closed position P2, and the door blade 62 may contact the end 43 of the discharge guide 45, thereby closing the outlet 41.

In this case, because the outlet 41 is blocked by the door blade 62, air flowing from the air blower 30 may pass the guide groove 47 formed in the guide body 46 of the discharge guide 45, causing the air flowing from the air blower 30 to flow along the second discharge path 42a to the discharge holes 42.

In a case where air is discharged out of the main body 10 through the discharge holes 42, the air may slow down while passing the plurality of discharge holes on the discharge plate 14, and may be discharged to the outside at low speed.

With the above-described structure, the indoor space may be cooled or heated at a wind speed that makes a user feel comfortable.

In the drying operation, air may be discharged to the outside of the air conditioner 1 through the first outlet 41a, the second outlet 41b, or the third outlet 41c that is opened, or may be discharged through the discharge holes 42 formed on the discharge plate 14 in a state where the first outlet 41a, the second outlet 41b, and the third outlet 41c are closed.

In the disclosure, an outlet provided in the main body 10 may include at least one of the outlet 41 or the discharge hole 42.

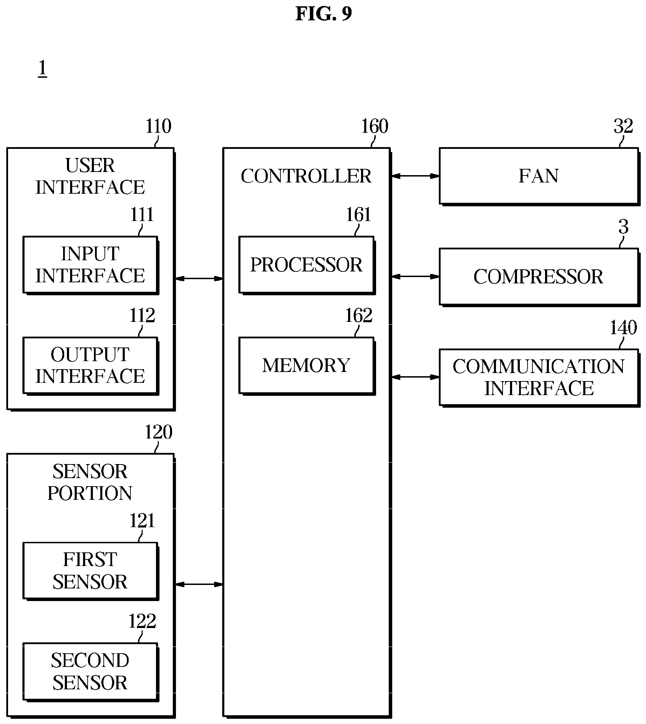

FIG. 9 is a control block diagram of an air conditioner according to an embodiment.

Referring to FIG. 9, the air conditioner 1 according to an embodiment may include a user interface device 110, a sensor portion 120, the compressor 3, the fan 32, a communication interface 140, and/or the controller 160.

The user interface device 110 may allow interaction between a user and the air conditioner 1.

The user interface device 110 may include an output interface 112 and an input interface 111.

At least one output interface 112 may deliver various types of information related to an operation of the air conditioner to a user by generating sensory information.

For example, at least one output interface 112 may deliver information related to a setting and an operating time of the air conditioner 1 to a user. Information about the operation of the air conditioner 1 may be output via a display, an indicator, and/or a voice. The at least one output interface 112 may include, for example, a liquid crystal display (LCD) panel, an indicator, a light emitting diode (LED) panel, a speaker, and the like.

At least one input interface 111 may convert sensory information received from a user into an electrical signal.

The at least one input interface 111 may include a power button for turning on the air conditioner 1, a setting button for setting an operation mode of the air conditioner 1, an adjustment button for adjusting a rotational speed of the compressor 3 and/or the fan 32, a timer button, and the like.

Each button may include a visual indicator (e.g., a phrase, an icon, etc.) representing a function thereof.

The at least one input interface 111 may include, for example, a tact switch, a push switch, a slide switch, a toggle switch, a micro switch, a touch switch, a touch pad, a touch screen, a jog dial, and/or a microphone.

In the disclosure, a 'button' may be replaced with a user interface (UI) element, a tact switch, a push switch, a slide switch, a toggle switch, a micro switch, a touch switch, a touch pad, a touch screen, a jog dial, and/or a microphone.

The power button is a button for turning on or off the air conditioner 1.

The setting button is a button for changing an operation mode of the air conditioner 1. The operation mode of the air conditioner may include a cooling operation, a heating operation, a drying operation, an eco mode, and the like.

An operating frequency of the compressor 3 and a rotational speed of the fan 32 may vary depending on an operation mode.

The adjustment button is a button for adjusting the operating frequency of the compressor 3 and/or the rotational speed of the fan 32 of the air conditioner 1. The operating frequency of the compressor 3 and/or the rotational speed of the fan 32 may be adjusted by manipulating the adjustment button.

The timer button is a button for setting an operating time of the air conditioner 1. The air conditioner 1 performs an operation according to an operation mode selected by a user for an operating time set by the timer button, and may end the operation when the operating time set by the timer button has elapsed.

The air conditioner 1 may process a user input received via the input interface 111, or may output information related to the air conditioner 1 through the output interface 112.

For example, the user input received via the input interface 111 may be delivered to the controller 160. As another example, the controller 160 may control the output interface 112 to output information related to the air conditioner 1.

The sensor portion 120 may include a first sensor 121 that collects indoor environmental data and/or a second sensor 122 that collects outdoor environmental information.

In an embodiment, the first sensor 121 may collect indoor environmental data. The indoor environmental data may include indoor temperature data, indoor humidity data, indoor wind direction data, indoor wind volume data, and the like.

The first sensor 121 may include an indoor temperature sensor for collecting temperature data of indoor air, a humidity sensor for collecting humidity data of indoor air, an indoor wind direction/wind speed sensor for collecting wind direction/wind speed data of indoor air, and the like. Air around the air conditioner 1 may be referred to as indoor air.

The first sensor 121 may transmit the collected indoor environmental data to the controller 160.

In an embodiment, the second sensor 122 may collect outdoor environmental data. The outdoor environmental data may include outdoor temperature data, outdoor humidity data, outdoor wind direction data, outdoor wind volume data, and the like. The second sensor 122 may include an outdoor temperature sensor for collecting temperature data of outdoor air, an outdoor humidity sensor for collecting humidity data of outdoor air, an outdoor wind direction/wind speed sensor that collects wind direction/wind speed data of outdoor air, and the like. Air around the outdoor unit 2 may be referred to as outdoor air.

The second sensor 122 may transmit the collected outdoor environmental data to the controller 160.

The fan 32 may rotate by a driving force of the fan motor 33.

Controlling the fan 32 by the controller 160 may include controlling the fan motor 33 by the controller 160. The controller 160 may control the rotational speed of the fan 32 by controlling the fan motor 33. Ending an air conditioning operation by the controller 160 may include stopping rotation of the fan 32 by controlling the fan motor 33 by the controller 160.

The compressor 3 may operate based on a control signal of the controller 160.

The controller 160 may operate the compressor 3 based on a cooling operation of the air conditioner 1 being started.

Ending the air conditioning operation may include stopping the operation of the compressor 3.

In an embodiment, at least one processor 161 may control the compressor 3 and the fan 32 to perform an air conditioning operation based on a set temperature. For example, the at least one processor 161 may determine an indoor temperature corresponding to indoor environmental data, and in a case where the indoor temperature is different from the set temperature, the at least one processor 161 may control the rotational speed of the fan 32 so that the indoor temperature reaches the set temperature. In addition, the at least one processor 161 may control the operation of the compressor 3 so that the indoor temperature corresponding to the indoor environmental data reaches the set temperature.

The communication interface 140 may include at least one of a short-range wireless communication module or a long-range wireless communication module.

The communication interface 140 may transmit data to an external device (e.g., the user device 6 and/or the computing device 7), or receive data from an external device. For example, the communication interface 140 may establish communication with the user device 6 and/or the computing device 7 and transmit and receive various types of data.

To this end, the communication interface 140 may support establishment of a direct (e.g., wired) communication channel or a wireless communication channel between external devices, and performing communication through the established communication channel. According to an embodiment, the communication interface 140 may include a wireless communication module (e.g., a cellular communication module, a short-range wireless communication module, or a global navigation satellite system (GNSS) communication module), or a wired communication module (e.g., a local area network (LAN) communication module or a power line communication module). Among these communication modules, the corresponding communication module may communicate with an external device through a first network (e.g., a short-range communication network, such as Bluetooth, Wi-Fi Direct, or infrared data association (IrDA)), or a second network (e.g., a long-range communication network, such as a legacy cellular network, a 5G network, a next-generation communication network, the Internet, or a computer network, such as a LAN or a WAN)). These various types of communication modules may be integrated into one component (e.g., a single chip) or implemented as a plurality of separate components (e.g., multiple chips).

The short-range wireless communication module may include a Bluetooth communication module, a Bluetooth Low Energy (BLE) communication module, a near field communication (NFC) module, a WLAN (Wi-Fi) communication module, a Zigbee communication module, an infrared data association (IrDA) communication module, a Wi-Fi Direct (WFD) communication module, an ultrawideband (UWB) communication module, an Ant+ communication module, a microwave (uWave) communication module, and the like, but is not limited thereto.

The long-range wireless communication module may include a communication module that performs various types of long-range wireless communication, and may include a mobile communication interface. The mobile communication interface transmits and receives a radio signal with at least one of a base station, an external terminal, or a server on a mobile communication network.

In an embodiment, the communication interface 140 may communicate with an external device, such as the user device 6 and/or the computing device 7, through a nearby access point (AP). The AP may connect a local area network (LAN) to which the air conditioner and/or the user device 6 is connected to a wide area network (WAN) to which the computing device 7 is connected. The air conditioner may be connected to the computing device 7 through a WAN.

The controller 160 may process a user command received from the input interface 111.

The controller 160 may process data collected from various sensors (e.g., the first sensor 121 and the second sensor 122).

The controller 160 may process a user command received via the communication interface 140.

The controller 160 may control various components (e.g., the output interface 112, the compressor 3, the fan 32, and/or the communication interface 140) of the air conditioner 1.

The controller 160 may include at least one processor 161 that controls the operation of the air conditioner 1 and at least one memory 162 in which a program and data for controlling the operation of the air conditioner 1 are stored.

The at least one memory 162 may store data required for various embodiments. The memory 162 may be implemented as a memory embedded in the air conditioner 1 or as a memory detachable from the air conditioner 1 depending on a data storage use. For example, data for driving the air conditioner 1 may be stored in the memory embedded in the air conditioner 1, and data for an extended function of the air conditioner 1 may be stored in the memory detachable from the air conditioner 1. Meanwhile, the memory embedded in the air conditioner 1 may be implemented as at least one of a volatile memory (e.g., a dynamic random access memory (DRAM), a static RAM (SRAM), or a synchronous dynamic RAM (SDRAM), etc.), and a non-volatile memory (e.g., one time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash or a NOR flash, etc.), a hard drive, or a solid state drive (SSD)). In addition, the memory detachable from the air conditioner 1 may be implemented as a memory card (e.g., a compact flash (CF), a secure digital (SD), a micro secure digital (Micro-SD), a mini secure digital (Mini-SD), an extreme digital (xD), a multi-media card (MMC), etc.), an external memory (e.g., universal serial bus (USB) memory) connectable to a USB port, and the like.

The at least one memory 162 may store an algorithm for performing an air conditioning operation.

The at least one processor 161 may control overall operation of the air conditioner 1. Specifically, the at least one processor 161 may be connected to each component of the air conditioner 1, and may control the overall operation of the air conditioner 1. For example, the at least one processor 161 may be electrically connected to the memory 162 and may control the overall operation of the air conditioner 1. The processor 161 may include a single or a plurality of processors.

The at least one processor 161 may perform the operation of the air conditioner 1 according to various embodiments by executing at least one instruction stored in the memory 162.

The at least one processor 161 may include at least one of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 161 may control one or any combination of other components of the air conditioner 1, and may perform communication-related operations or data processing. The at least one processor 161 may execute at least one program or instruction stored in the memory 162. For example, the at least one processor 161 may execute at least one instruction stored in the memory 162 to perform a method according to at least one embodiment of the disclosure.

The at least one memory 162 may store an algorithm for controlling the compressor 3 and/or the fan 32 according to an operation mode of the air conditioner 1.

The configuration shown in FIG. 9 is an example configuration of the air conditioner 1, and the air conditioner 1 according to an embodiment may further include other components in addition to the components shown in FIG. 9.

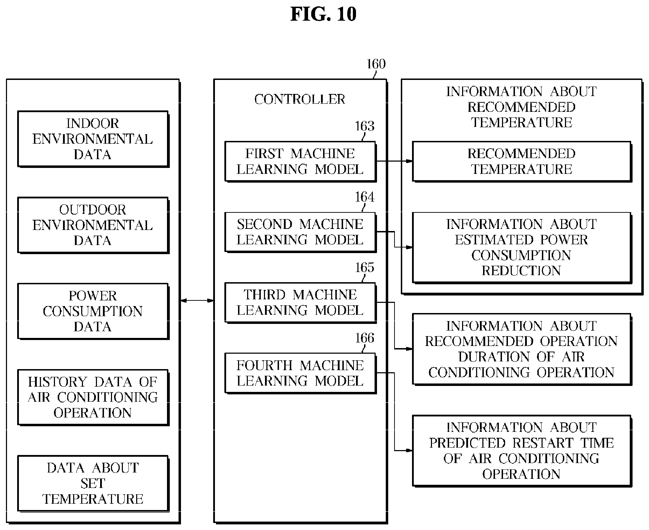

FIG. 10 is a block diagram illustrating an example of obtaining various types of information using a machine learning model of an air conditioner according to an embodiment.

The controller 160 may include a first machine learning model 163, a second machine learning model 164, a third machine learning model 165, and/or a fourth machine learning model 166.

The machine learning model may be trained using data collected from the sensor portion 120 as training data. The machine learning model may include a supervised learning model, an unsupervised learning model, and a reinforcement learning model. The supervised learning model may be trained using a regression method, a classification method, or the like. The unsupervised learning model may be trained using a clustering method, a dimensionality reduction method, or the like.

The memory 162 may store the machine learning models. For example, the memory 162 may store an air conditioning operation application downloadable from the computing device 6. The air conditioning operation application is a downloadable app, and at least a portion thereof may be semi-permanently stored or temporarily generated in a computer-readable recording medium, such as a memory of a manufacturer's server, an application store's server, or a relay server. The air conditioning operation application may include a machine learning model. The machine learning model included in the air conditioning operation application may be updated by an external server.

The memory 162 may store indoor environmental data, outdoor environmental data, data about a set temperature, power consumption data, and/or history data of an air conditioning operation.

Data about the set temperature may include data about a set temperature set by a user in an air conditioning operation.

The power consumption data may include data about power consumption of an air conditioning operation. For example, the power consumption data may include data about power consumption from a start to an end of the air conditioning operation. As another example, the power consumption data may include data about power consumption for a preset time (e.g., 1 hour) from a start of the air conditioning operation. Here, the preset time may include a time from a start of the air conditioning operation until the set temperature is reached, a time from a start of the air conditioning operation until an operating frequency of the compressor 3 reaches a predetermined frequency or less, and the like.

The history data of the air conditioning operation may include data about a start time, a date, and an end time of the air conditioning operation, and/or data about a location where the air conditioning operation is performed.

The memory 162 may store indoor environmental data and outdoor environmental data for a preset time after an end of the air conditioning operation.

In various embodiments, the at least one processor 161 may obtain various types of information by inputting various types of data stored in the memory 162 into the machine learning model.

This will be described below.

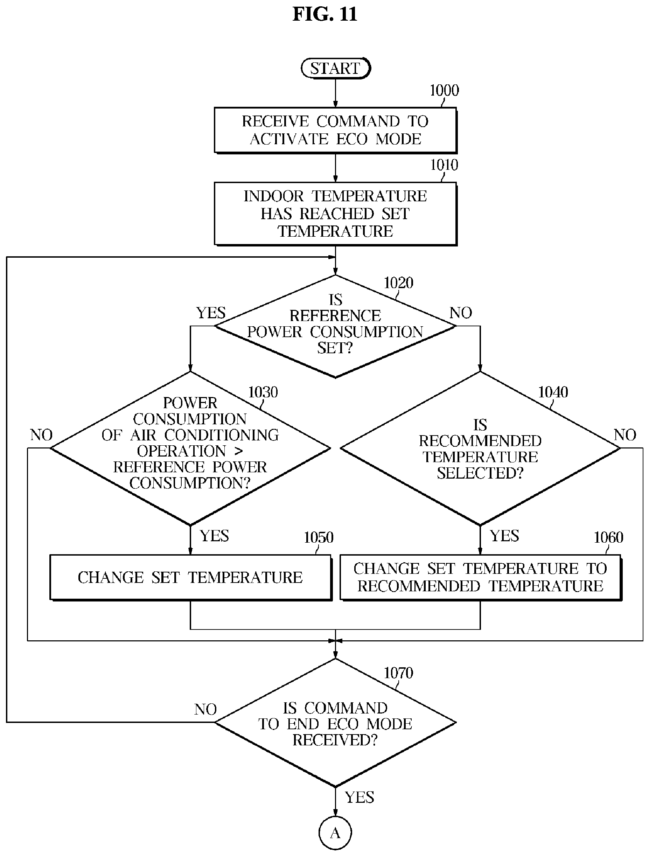

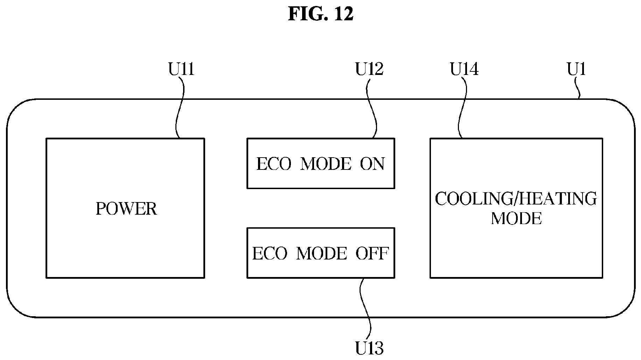

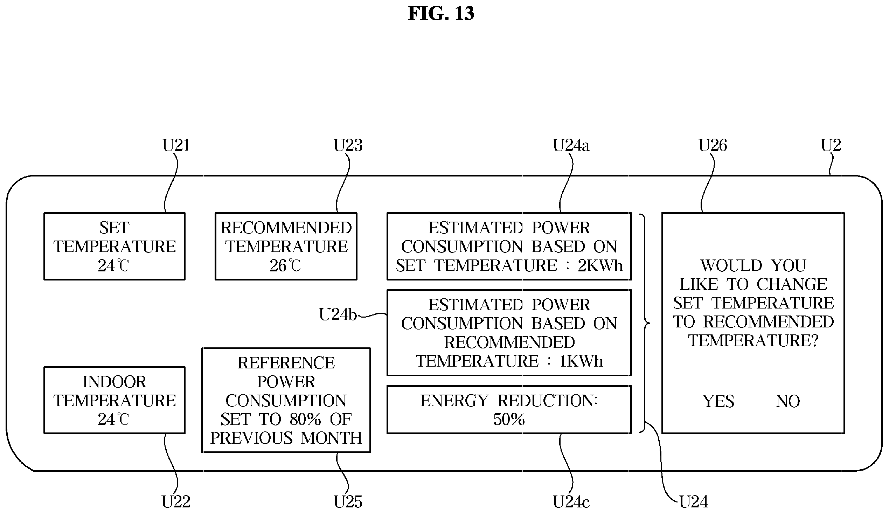

FIG. 11 is a flowchart illustrating an example of controlling an air conditioning operation during an eco mode of an air conditioner according to an embodiment. FIG. 12 illustrates an example of an interface for activating an eco mode of an air conditioner according to an embodiment. FIG. 13 illustrates an example of an interface for changing a set temperature during an air conditioning operation in an eco mode according to an embodiment.

Referring to FIG. 11, the at least one processor 161 may perform an air conditioning operation in an eco mode based on receiving a command to activate the eco mode (1000). The eco mode is an operation mode of the air conditioning operation, and may include a mode for reducing (saving) power consumption of the air conditioning operation. However, the term 'eco mode' is not limited thereto, and may be referred to by various names.

Hereinafter, various embodiments in which the at least one processor 161 receives the command to activate the eco mode will be described.

Referring to FIG. 12, an interface U1 for setting an operation mode of an air conditioning operation may be provided through the output interface 112 of the air conditioner 1 and/or the output interface of the user device 6.

In an embodiment, the at least one processor 161 may control the output interface 112 to provide the interface U1 for setting the operation mode of the air conditioning operation.

In an embodiment, a processor of the user device 6 may control the output interface of the user device 6 to provide the interface U1 for setting the operation mode of the air conditioning operation.

In an embodiment, a processor of the computing device 7 may transmit an electrical signal to the air conditioner 1 and/or the user device 6 to provide the interface U1 for setting the operation mode of the air conditioning operation.

In the disclosure, providing an interface by the computing device 7 may include transmitting a control signal for causing the computing device 7 to provide the interface to the air conditioner 1 and/or the user device 6.

The interface U1 for setting the operation mode of the air conditioning operation may include an interface element U11 for turning on/off the air conditioner 1, interface elements U12 and U13 for turning on/off the eco mode, an interface element U14 for turning on/off a cooling mode or a heating mode, and the like.

The at least one processor 161 may receive the command to activate the eco mode via the input interface 111 of the air conditioner 1 and/or the input interface of the user device 6.

In an embodiment, the at least one processor 161 may receive the command to activate the eco mode via the input interface 111 of the air conditioner 1.

In an embodiment, the user device 6 may receive the command to activate the eco mode via the input interface of the user device 6, and transmit the command to the air conditioner 1, and the air conditioner 1 may receive the command to activate the eco mode from the user device 6 via the communication interface 140.

The command to activate the eco mode may be generated in response to a user pressing an area corresponding to the interface element U12 for turning on the eco mode. In addition, the command to activate the eco mode may be generated in response to a user pressing an area corresponding to the interface element U11 for turning on/off the air conditioner 1 for a predetermined time (e.g., 2 seconds).

Referring back to FIG. 11, in an embodiment, the at least one processor 161 may determine an indoor temperature based on indoor environmental data.

In an embodiment, the at least one processor 161 may determine whether the indoor temperature has reached a set temperature (1010).

In an embodiment, the at least one processor 161 may determine a recommended temperature based on the indoor environmental data, outdoor environmental data, and the set temperature.

For example, the at least one processor 161 may determine the indoor temperature and indoor humidity based on the indoor environmental data, may determine an outdoor temperature and outdoor humidity based on the outdoor environmental data, and may determine the recommended temperature based on the indoor temperature, the indoor humidity, the outdoor temperature, the indoor humidity, and the set temperature. That is, the recommended temperature may be determined by considering both the indoor environment and the outdoor environment.

An indoor environment where a user is present may be determined not only by the air conditioning operation but also by the outdoor environment. For example, the indoor temperature may be changed by the air conditioning operation and by the outdoor temperature. As another example, the indoor humidity may be changed by the air conditioning operation, and by the outdoor humidity.

According to the disclosure, by determining the recommended temperature suitable for the air conditioning operation considering both the indoor environment and the outdoor environment, a comfortable indoor environment may be provided to a user.

In a case where a user is present indoors, proper indoor humidity is to be maintained to provide a comfortable indoor environment to the user. The indoor humidity may be changed by the indoor temperature, the outdoor temperature, and the outdoor humidity.

According to the disclosure, by determining the recommended temperature suitable for the air conditioning operation considering the indoor temperature, the outdoor temperature, the indoor humidity, and the outdoor humidity, a comfortable indoor environment may be provided to a user.

According to the disclosure, power consumption of the air conditioning operation may be reduced by considering the set temperature when determining the recommended temperature.

Referring to FIG. 10, in an embodiment, the at least one processor 161 may determine the recommended temperature by inputting the indoor environmental data, the outdoor environmental data, and data about the set temperature into the first machine learning model 163.

The first machine learning model 163 may be trained using the indoor environmental data, the outdoor environmental data, and the data about the set temperature stored in the memory 162 as training data. For example, the first machine learning model 163 may be trained using indoor temperature data, indoor humidity data, outdoor temperature data, outdoor humidity data, and the data about the set temperature stored in the memory 162 as training data.

In an embodiment, the at least one processor 161 may determine, using the second machine learning model 164, an estimated power consumption reduction compared to a case where the set temperature is not changed to the recommended temperature.

The second machine learning model 164 may be trained using the power consumption data of the air conditioning operation stored in the memory 162 as training data. For example, the second machine learning model 164 may be trained using the power consumption data of the air conditioning operation based on the set temperature as training data.

Referring back to FIG. 11, in an embodiment, based on the indoor temperature reaching the set temperature (1010), the at least one processor 161 may transmit information about the recommended temperature to an external device. The information about the recommended temperature may include information about the recommended temperature and the estimated power consumption reduction when the set temperature is changed to the recommended temperature, compared to no change in the set temperature.

In an embodiment, the at least one processor 161 may change the set temperature to the recommended temperature (1060), based on receiving a command to select the recommended temperature from the external device (1040).

In an embodiment, in a case where a reference power consumption is set by the user (Yes in operation 1020), the at least one processor 161 may change the set temperature, based on the indoor temperature reaching the set temperature and power consumption of the air conditioning operation being equal to or greater than the reference power consumption (Yes in operation 1030).

Referring to FIG. 12, an interface U2 for changing the set temperature during the air conditioning operation in the eco mode may be provided through the output interface 112 of the air conditioner 1 and/or the output interface of the user device 6.

In an embodiment, the at least one processor 161 may control the output interface 112 to provide the interface U2 for changing the set temperature during the air conditioning operation in the eco mode.

In an embodiment, the processor of the user device 6 may control the output interface of the user device 6 to provide the interface U2 for changing the set temperature during the air conditioning operation in the eco mode.

In an embodiment, the processor of the computing device 7 may transmit an electrical signal to the air conditioner 1 and/or the user device 6 to provide the interface U2 for changing the set temperature during the air conditioning operation in the eco mode.

The interface U2 for changing the set temperature during the air conditioning operation in the eco mode may include an interface element U21 for providing information about a set temperature, an interface element U22 for providing information about an indoor temperature, interface elements U23 and U24 for providing information about a recommended temperature, an interface element U25 for setting a reference power consumption, and/or an interface element U26 for changing a set temperature to a recommended temperature.

An interface element for providing information about the recommended temperature may include the recommended temperature interface element U23 and/or the interface element U24 for providing information about an estimated power consumption reduction when the set temperature is changed to the recommended temperature compared to no change in the set temperature.

The interface element U24 for providing information about the estimated power consumption reduction may include an interface element U24a for providing information about an estimated power consumption reduction based on the set temperature, an interface element U24b for providing information about an estimated power consumption reduction based on the recommended temperature, and/or an interface element U24c for providing information about energy reduction.

A user may set the reference power consumption via the interface element U25 for setting the reference power consumption. The reference power consumption may be determined by power consumption of the air conditioning operation for a predetermined period.

The at least one processor 161 may receive the command to select the recommended temperature via the input interface 111 of the air conditioner 1 and/or the input interface of the user device 6.

In an embodiment, the at least one processor 161 may receive the command to select the recommended temperature via the input interface 111 of the air conditioner 1.

In an embodiment, the user device 6 may receive the command to select the recommended temperature via the input interface of the user device 6 and may transmit the command to the air conditioner 1, and the air conditioner 1 may receive the command to select the recommended temperature from the user device 6 via the communication interface 140.

The command to select the recommended temperature may be generated in response to a user pressing an area corresponding to the interface element U26 for changing the set temperature to the recommended temperature. For example, the command to select the recommended temperature may be generated in response to a user pressing a predetermined area (e.g., YES) on the interface element U26 for changing the set temperature to the recommended temperature.

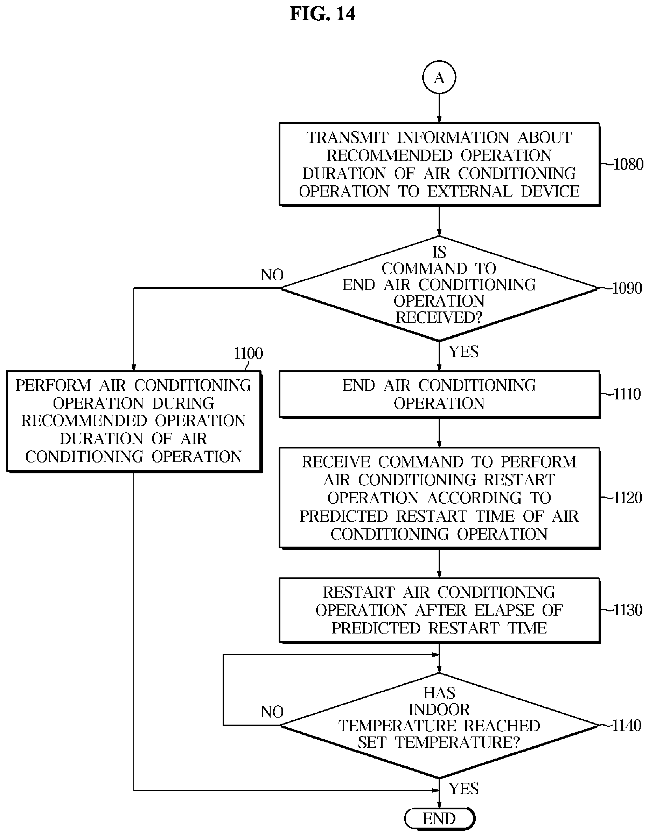

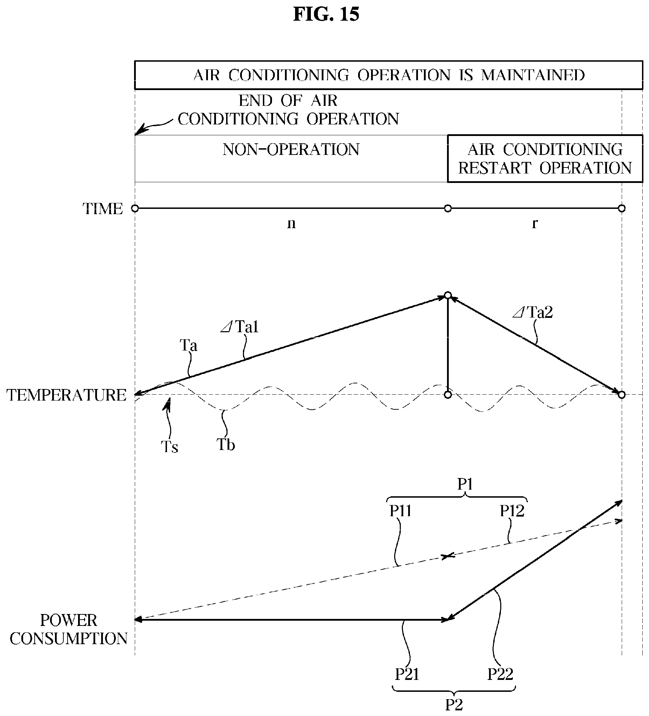

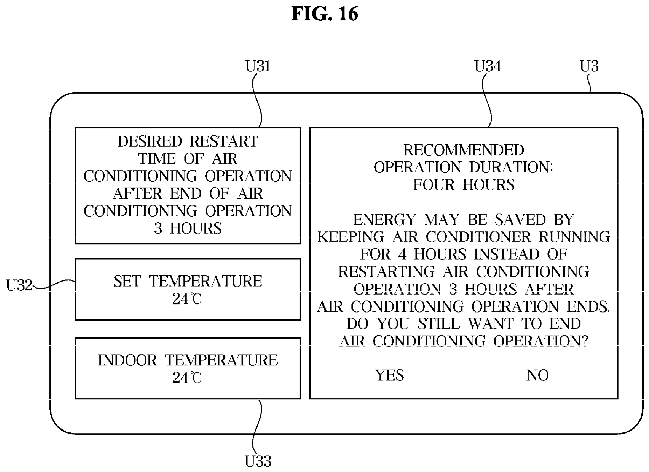

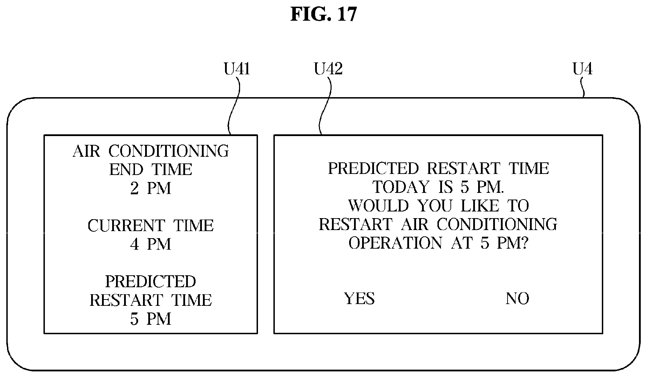

FIG. 14 is a flowchart illustrating an example of controlling an air conditioning operation when an eco mode of an air conditioner according to an embodiment ends. FIG. 15 illustrates an example method for obtaining a recommended operation duration of an air conditioning operation according to an embodiment. FIG. 16 illustrates an example of an interface for determining whether to maintain an air conditioning operation according to an embodiment. FIG. 17 illustrates an example of an interface for determining whether to restart an air conditioning operation according to an embodiment.

Referring to FIG. 11 and FIG. 14, based on receiving a command to end the eco mode (Yes in operation 1070 of FIG. 11), the at least one processor 161 may transmit information about a recommended operation duration of the air conditioning operation to the external device (1080).

The at least one processor 161 may receive the command to end the eco mode via the input interface 111 of the air conditioner 1 and/or the input interface of the user device 6.

In an embodiment, the at least one processor 161 may receive the command to end the eco mode via the input interface 111 of the air conditioner 1.

In an embodiment, the user device 6 may receive the command to end the eco mode via the input interface of the user device 6 and transmit the command to the air conditioner 1, and the air conditioner 1 may receive the command to end the eco mode from the user device 6 via the communication interface 140.

The command to end the eco mode may be generated in response to a user pressing an area corresponding to the interface element U13 (refer to FIG. 12) for turning off the eco mode. In addition, the command to end the eco mode may be generated in response to a user pressing an area corresponding to the interface element U11 (refer to FIG. 12) for turning on/off the air conditioner 1 for a predetermined time (e.g., 2 seconds).

In an embodiment, in response to receiving the command to end the eco mode, the at least one processor 161 may determine a recommended operation duration of the air conditioning operation based on the indoor environmental data, the outdoor environmental data, the set temperature, and a desired restart time of the air conditioning operation after the end of the air conditioning operation. Here, the desired restart time of the air conditioning operation may be set by a user.

For example, the at least one processor 161 may determine the recommended operation duration of the air conditioning operation based on indoor temperature data, indoor humidity data, outdoor temperature data, outdoor humidity data, the desired restart time, and the set temperature.

Referring to FIG. 10, in an embodiment, the at least one processor 161 may determine the recommended operation duration of the air conditioning operation using the third machine learning model 165. The third machine learning model 165 may be trained using the indoor environmental data, the outdoor environmental data, the data about the set temperature, and the power consumption data of the air conditioning operation stored in the memory 162 as training data.

Referring to FIG. 15, in an embodiment, the at least one processor 161 may determine, using the third machine learning model 165, a duration during which estimated power consumption is reduced while maintaining the air conditioning operation, compared to performing an air conditioning restart operation. The recommended operation duration may include the duration during which the estimated power consumption is reduced while maintaining the air conditioning operation compared to performing the air conditioning restart operation after elapse of the desired restart time.

For example, the at least one processor 161 may input the indoor environmental data, outdoor environmental data, and data about the desired restart time (n) into the third machine learning model 165 to determine an indoor temperature (Ta) when the air conditioning operation ends and an indoor temperature (Ta+△Ta1) at a time point when the desired restart time elapses after the end of the air conditioning operation, and may determine a time (r) required for the indoor temperature (Ta+△Ta1), at a time point when the desired restart time (n) elapses, to reach the set temperature (Ts) again.

The at least one processor 161 may input the indoor environmental data, the outdoor environmental data, and the data about the desired restart time (n) into the third machine learning model 165 to determine an indoor temperature (Tb) while maintaining the air conditioning operation, and may determine estimated power consumption (P1=P11+P12) while the air conditioning operation is performed at the indoor temperature (Tb) and estimated power consumption (P2=P21+P22) consumed until the set temperature (Ts) is reached again when performing the air conditioning restart operation after the end of the air conditioning operation.

In a case where the estimated power consumption P1 while the air conditioning operation is continuously performed at the indoor temperature (Tb) during a time (n+r) corresponding to the desired restart time and a time required to reach the set temperature (Ts) again is less than the estimated power consumption P2 consumed until the set temperature (Ts) is reached again when performing the air conditioning restart operation after the end of the air conditioning operation, the time (n+r) may be determined as the recommended operation duration of the air conditioning operation.

Referring back to FIG. 14, in an embodiment, after receiving the command to end the eco mode, the at least one processor 161 may end the air conditioning operation (1110) based on receiving a command to end the air conditioning operation (Yes in operation 1090).

In an embodiment, when no command to end the air conditioning operation is received (No in operation 1090), the at least one processor 161 may perform the air conditioning operation for the recommended operation duration. Not receiving the command to end the air conditioning operation may include receiving a command to maintain the air conditioning operation.

Referring to FIG. 16, an interface U3 for determining whether to maintain the air conditioning operation may be provided through the output interface 112 of the air conditioner 1 and/or the output interface of the user device 6.

In an embodiment, the at least one processor 161 may control the output interface 112 to provide the interface U3 for determining whether to maintain the air conditioning operation.

In an embodiment, the processor of the user device 6 may control the output interface of the user device 6 to provide the interface U3 for determining whether to maintain the air conditioning operation.

In an embodiment, the processor of the computing device 7 may transmit an electrical signal to the air conditioner 1 and/or the user device 6 to provide the interface U3 for determining whether to maintain the air conditioning operation.

The interface U3 for determining whether to maintain the air conditioning operation may include an interface element U31 for setting a desired restart time of the air conditioning operation after the end of the air conditioning operation, an interface element U32 for providing information about a set temperature, an interface element U33 for providing information about an indoor temperature, and/or an interface element U34 for determining whether to maintain the air conditioning operation according to the recommended operation duration.

A user may input the desired restart time via the interface element U31 for setting the desired restart time of the air conditioning operation.

The interface element U34 for determining whether to maintain the air conditioning operation according to the recommended operation duration may provide information about the recommended operation duration (e.g., 4 hours) and a guide that maintaining the air conditioning operation may save power consumption compared to performing an air conditioning restart operation.

The at least one processor 161 may receive the command to end the air conditioning operation via the input interface 111 of the air conditioner 1 and/or the input interface of the user device 6.

In an embodiment, the at least one processor 161 may receive the command to end the air conditioning operation via the input interface 111 of the air conditioner 1.

In an embodiment, the user device 6 may receive the command to end the air conditioning operation via the input interface of the user device 6 and transmit the command to the air conditioner 1, and the air conditioner 1 may receive the command to end the air conditioning operation from the user device 6 via the communication interface 140.

The command to end the air conditioning operation may be generated in response to a user pressing a predetermined area (e.g., YES) on the interface element U34 for determining whether to maintain the air conditioning operation according to the recommended operation duration.

The command to maintain the air conditioning operation may be generated in response to a user pressing another area (e.g., NO) on the interface element U34 for determining whether to maintain the air conditioning operation according to the recommended operation duration.

Referring back to FIG. 14, in an embodiment, the at least one processor 161 may determine a predicted restart time of the air conditioning operation after the end of the air conditioning operation. The predicted restart time of the air conditioning operation may include a time at which the air conditioning operation is predicted to be performed again by a user after the end of the air conditioning operation. For example, the at least one processor 161 may determine the predicted restart time based on the desired restart time input by the user and/or history data of the air conditioning operation.

Referring to FIG. 10, in an embodiment, the at least one processor 161 may determine the predicted restart time after the end of the air conditioning operation using the fourth machine learning model 166.

The fourth machine learning model 166 may be trained using the history data of the air conditioning operation stored in the memory 162 as training data. For example, the fourth machine learning model 166 may be trained using data about a start time, a date, and an end time of the air conditioning operation, and/or data about a location where the air conditioning operation is performed stored in the memory 162.

Referring back to FIG. 14, in an embodiment, the at least one processor 161 may restart the air conditioning operation (perform an air conditioning restart operation) after elapse of the predicted restart time (1130) based on receiving a command to perform the air conditioning restart operation according to the predicted restart time through the external device (1120).

In an embodiment, the at least one processor 161 may perform the air conditioning restart operation so that the indoor temperature reaches the set temperature after elapse of the predicted restart time (1140).

Referring to FIG. 17, an interface U4 for determining whether to restart the air conditioning operation may be provided through the output interface 112 of the air conditioner 1 and/or the output interface of the user device 6.

In an embodiment, the at least one processor 161 may control the output interface 112 to provide the interface U4 for determining whether to restart the air conditioning operation.

In an embodiment, the processor of the user device 6 may control the output interface of the user device 6 to provide the interface U4 for determining whether to restart the air conditioning operation.

In an embodiment, the processor of the computing device 7 may transmit an electrical signal to the air conditioner 1 and/or the user device 6 to provide the interface U4 for determining whether to restart the air conditioning operation.

The interface U4 for determining whether to restart the air conditioning operation may include an interface element U41 for providing information about the predicted restart time of the air conditioning operation and/or an interface element U42 for determining whether to restart the air conditioning operation according to the predicted restart time of the air conditioning operation.

The interface element U41 for providing information about the predicted restart time may display information about an air conditioning end time, a current time, and/or a predicted restart time.

The interface element U42 for determining whether to restart the air conditioning operation according to the predicted restart time may provide a guide for information about the predicted restart time.

The at least one processor 161 may receive the command to perform the air conditioning restart operation according to the predicted restart time via the input interface 111 of the air conditioner 1 and/or the input interface of the user device 6.

In an embodiment, the at least one processor 161 may receive the command to perform the air conditioning restart operation according to the predicted restart time via the input interface 111 of the air conditioner 1.

In an embodiment, the user device 6 may receive the command to perform the air conditioning restart operation according to the predicted restart time via the input interface of the user device 6 and transmit the command to the air conditioner 1, and the air conditioner 1 may receive the command to perform the air conditioning restart operation according to the predicted restart time from the user device 6 via the communication interface 140.

The command to perform the air conditioning restart operation according to the predicted restart time may be generated in response to a user pressing a predetermined area (e.g., YES) on the interface element U42 for determining whether to restart the air conditioning operation according to the predicted restart time.

According to an embodiment of the disclosure, an air conditioner may include: a main body including an outlet;
a heat exchanger; a compressor configured to compress a refrigerant supplied from the heat exchanger; a fan configured to blow air that exchanges heat in the heat exchanger to the outlet; a first sensor configured to collect indoor environmental data; a second sensor configured to collect outdoor environmental data; and at least one processor configured to control the compressor and the fan to perform an air conditioning operation based on a set temperature. During the air conditioning operation in an eco mode, the at least one processor may be configured to: determine a recommended temperature based on the indoor environmental data, the outdoor environmental data, and the set temperature; transmit information about the recommended temperature to an external device based on an indoor temperature corresponding to the indoor environmental data reaching the set temperature; change the set temperature to the recommended temperature based on receiving a command to select the recommended temperature from the external device; in response to receiving a command to end the eco mode, determine a recommended operation duration of the air conditioning operation based on the indoor environmental data, the outdoor environmental data, the set temperature, and a desired restart time of the air conditioning operation after an end of the air conditioning operation, the desired restart time being set by a user; and transmit information about the recommended operation duration of the air conditioning operation to the external device.

The at least one processor may be configured to input the indoor environmental data, the outdoor environmental data, and data about the set temperature into a first machine learning model to determine the recommended temperature.

The air conditioner may further include: memory configured to store the indoor environmental data, the outdoor environmental data, and the data about the set temperature, wherein the first machine learning model may be trained using the indoor environmental data, the outdoor environmental data, and the data about the set temperature stored in the memory as training data.

The memory may be configured to store power consumption data of the air conditioning operation, the at least one processor may be configured to determine, using a second machine learning model, an estimated power consumption reduction based on the set temperature being changed to the recommended temperature, compared to no change in the set temperature, the second machine learning model may be trained using the power consumption data of the air conditioning operation stored in the memory as training data, and the information about the recommended temperature may include information about the estimated power consumption reduction.

Based on a reference power consumption being set by the user, the at least one processor may be configured to change the set temperature in response to the indoor temperature reaching the set temperature and power consumption of the air conditioning operation being equal to or greater than the reference power consumption.

The air conditioner may further include: memory configured to store the indoor environmental data, the outdoor environmental data, data about the set temperature, and power consumption data of the air conditioning operation, wherein the at least one processor may be configured to determine, using a third machine learning model, a duration during which an estimated power consumption is reduced while maintaining the air conditioning operation compared to performing an air conditioning restart operation after elapse of the desired restart time, the third machine learning model may be trained using the indoor environmental data, the outdoor environmental data, the data about the set temperature, and the power consumption data of the air conditioning operation stored in the memory as training data, and the recommended operation duration may include the duration during which the estimated power consumption is reduced while maintaining the air conditioning operation compared to performing the air conditioning restart operation after elapse of the desired restart time.

The at least one processor may be configured to end the air conditioning operation based on receiving a command to end the air conditioning operation after receiving the command to end the eco mode.

The air conditioner may further include: memory configured to store history data of the air conditioning operation, wherein the at least one processor may be configured to determine a predicted restart time of the air conditioning operation after the end of the air conditioning operation using a fourth machine learning model, and the fourth machine learning model may be trained using the history data of the air conditioning operation stored in the memory as training data.

The at least one processor may be configured to perform an air conditioning restart operation after elapse of the predicted restart time of the air conditioning operation, based on receiving a command to perform the air conditioning restart operation according to the predicted restart time through the external device.

The at least one processor may be configured to perform the air conditioning restart operation to allow the indoor temperature to reach the set temperature after elapse of the predicted restart time of the air conditioning operation.

According to an embodiment of the disclosure, a method for controlling an air conditioner may include: collecting indoor environmental data; collecting outdoor environmental data; during an air conditioning operation in an eco mode, determining a recommended temperature based on the indoor environmental data, the outdoor environmental data, and a set temperature; transmitting information about the recommended temperature to an external device based on an indoor temperature corresponding to the indoor environmental data reaching the set temperature; changing the set temperature to the recommended temperature based on receiving a command to select the recommended temperature; in response to receiving a command to end the eco mode, determining a recommended operation duration of the air conditioning operation based on the indoor environmental data, the outdoor environmental data, the set temperature, and a desired restart time of the air conditioning operation after an end of the air conditioning operation, the desired restart time being set by a user; and transmitting information about the recommended operation duration of the air conditioning operation to the external device.

The determining of the recommended temperature based on the indoor environmental data, the outdoor environmental data, and the set temperature during the air conditioning operation in the eco mode may include: inputting the indoor environmental data, the outdoor environmental data, and data about the set temperature into a first machine learning model to determine the recommended temperature.

In the method for controlling the air conditioner including memory configured to store the indoor environmental data, the outdoor environmental data, and the data about the set temperature, the first machine learning model may be trained using the indoor environmental data, the outdoor environmental data, and the data about the set temperature stored in the memory as training data.

The method may further include: storing, by the memory, power consumption data of the air conditioning operation; and
determining, using a second machine learning model, an estimated power consumption reduction based on the set temperature being changed to the recommended temperature, compared to no change in the set temperature, wherein the second machine learning model may be trained using the power consumption data of the air conditioning operation stored in the memory as training data, and the information about the recommended temperature may include information about the estimated power consumption reduction.

The method may further include, based on a reference power consumption being set by the user, changing the set temperature in response to the indoor temperature reaching the set temperature and power consumption of the air conditioning operation being equal to or greater than the reference power consumption.

In the method for controlling the air conditioner including memory configured to store the indoor environmental data, the outdoor environmental data, data about the set temperature, and power consumption data of the air conditioning operation, the determining of the recommended operation duration of the air conditioning operation based on the indoor environmental data, the outdoor environmental data, the set temperature, and the desired restart time of the air conditioning operation after the end of the air conditioning operation may include: determining, using a third machine learning model, a duration during which an estimated power consumption is reduced while maintaining the air conditioning operation compared to performing an air conditioning restart operation after elapse of the desired restart time, the third machine learning model may be trained using the indoor environmental data, the outdoor environmental data, the data about the set temperature, and the power consumption data of the air conditioning operation stored in the memory as training data, and the recommended operation duration may include the duration during which the estimated power consumption is reduced while maintaining the air conditioning operation compared to performing the air conditioning restart operation after elapse of the desired restart time.

The method may further include ending the air conditioning operation based on receiving a command to end the air conditioning operation after receiving the command to end the eco mode.

In the method for controlling the air conditioner further including memory configured to store history data of the air conditioning operation, the method may further include determining a predicted restart time of the air conditioning operation after the end of the air conditioning operation using a fourth machine learning model, and the fourth machine learning model may be trained using the history data of the air conditioning operation stored in the memory as training data.

The method may further include performing an air conditioning restart operation after elapse of the predicted restart time of the air conditioning operation, based on receiving a command to perform the air conditioning restart operation according to the predicted restart time through the external device.

The performing of the air conditioning restart operation after elapse of the predicted restart time may include performing the air conditioning restart operation to allow the indoor temperature to reach the set temperature after elapse of the predicted restart time of the air conditioning operation.

Embodiments may be implemented in the form of a recording medium that stores instructions executable by a computer. The instructions may be stored in the form of program codes, and when executed by a processor, the instructions may create a program module to perform operations of the disclosed embodiments. The recording medium may be implemented as a computer-readable recording medium.

The computer-readable recording medium may include all kinds of recording media storing instructions that can be interpreted by a computer. For example, the computer-readable recording medium may be read only memory (ROM), random access memory (RAM), a magnetic tape, a magnetic disc, a flash memory, an optical data storage device, etc.

The computer-readable recording medium may be provided in the form of a non-transitory storage medium. Here, when a storage medium is referred to as "non-transitory", it may be understood that the storage medium is tangible and does not include a signal (e.g., an electromagnetic wave), but rather that data is semi-permanently or temporarily stored in the storage medium. For example, a "non-transitory storage medium" may include a buffer in which data is temporarily stored.

The method according to the various embodiments disclosed herein may be provided in a computer program product. The computer program product may be traded between a seller and a buyer as a product. The computer program product may be distributed in the form of a machine-readable recording medium (e.g., compact disc read only memory (CD-ROM)), or may be distributed (e.g., download or upload) through an application store (e.g., Play Store^{™}) online or directly between two user devices (e.g., smartphones). In the case of online distribution, at least a portion of the computer program product (e.g., downloadable app) may be stored at least semi-permanently or may be temporarily generated in a recording medium, such as a memory of a server of a manufacturer, a server of an application store, or a relay server.

Although embodiments of the disclosure have been described with reference to the accompanying drawings, a person having ordinary skilled in the art will appreciate that other specific modifications may be easily made without departing from the technical spirit or essential features of the disclosure. Therefore, the foregoing embodiments should be regarded as illustrative rather than limiting in all aspects.

## Claims

1. An air conditioner, comprising:
a main body comprising an outlet;
a heat exchanger;
a compressor configured to compress a refrigerant supplied from the heat exchanger;
a fan configured to blow air that exchanges heat in the heat exchanger to the outlet;
a first sensor configured to collect indoor environmental data;
a second sensor configured to collect outdoor environmental data; and
at least one processor configured to control the compressor and the fan to perform an air conditioning operation based on a set temperature,
wherein, during the air conditioning operation in an eco mode, the at least one processor is configured to:
determine a recommended temperature based on the indoor environmental data, the outdoor environmental data, and the set temperature;
transmit information about the recommended temperature to an external device based on an indoor temperature corresponding to the indoor environmental data reaching the set temperature;
change the set temperature to the recommended temperature based on receiving a command to select the recommended temperature from the external device;
based on receiving a command to end the eco mode, determine a recommended operation duration of the air conditioning operation based on the indoor environmental data, the outdoor environmental data, the set temperature, and a desired restart time of the air conditioning operation after an end of the air conditioning operation, the desired restart time being set by a user; and
transmit information about the recommended operation duration of the air conditioning operation to the external device.

2. The air conditioner of claim 1, wherein the at least one processor is further configured to input the indoor environmental data, the outdoor environmental data, and data about the set temperature into a first machine learning model to determine the recommended temperature.

3. The air conditioner of claim 2, further comprising:
memory configured to store the indoor environmental data, the outdoor environmental data, and the data about the set temperature,
wherein the first machine learning model is trained using the indoor environmental data, the outdoor environmental data, and the data about the set temperature stored in the memory as training data.

4. The air conditioner of claim 3, wherein the memory is configured to store power consumption data of the air conditioning operation,
wherein the at least one processor is further configured to determine, using a second machine learning model, an estimated power consumption reduction based on the set temperature being changed to the recommended temperature, compared to no change in the set temperature,
wherein the second machine learning model is trained using the power consumption data of the air conditioning operation stored in the memory as training data, and
wherein the information about the recommended temperature comprises information about the estimated power consumption reduction.

5. The air conditioner of claim 2, wherein, based on a reference power consumption being set by a user, the at least one processor is configured to change the set temperature based on the indoor temperature reaching the set temperature and power consumption of the air conditioning operation being equal to or greater than the reference power consumption.

6. The air conditioner of claim 1, further comprising:
memory configured to store the indoor environmental data, the outdoor environmental data, data about the set temperature, and power consumption data of the air conditioning operation,
wherein the at least one processor is further configured to determine, using a third machine learning model, a duration during which an estimated power consumption is reduced while maintaining the air conditioning operation compared to performing an air conditioning restart operation after elapse of the desired restart time,
wherein the third machine learning model is trained using the indoor environmental data, the outdoor environmental data, the data about the set temperature, and the power consumption data of the air conditioning operation stored in the memory as training data, and
wherein the recommended operation duration comprises the duration during which the estimated power consumption is reduced while maintaining the air conditioning operation compared to performing the air conditioning restart operation after elapse of the desired restart time.

7. The air conditioner of claim 1, wherein the at least one processor is further configured to end the air conditioning operation based on receiving a command to end the air conditioning operation after receiving the command to end the eco mode.

8. The air conditioner of claim 7, further comprising:
memory configured to store history data of the air conditioning operation,
wherein the at least one processor is further configured to determine a predicted restart time of the air conditioning operation after the end of the air conditioning operation using a fourth machine learning model, and
wherein the fourth machine learning model is trained using the history data of the air conditioning operation stored in the memory as training data.

9. The air conditioner of claim 8, wherein the at least one processor is further configured to perform an air conditioning restart operation after elapse of the predicted restart time of the air conditioning operation, based on receiving a command to perform the air conditioning restart operation according to the predicted restart time through the external device.

10. The air conditioner of claim 9, wherein the at least one processor is further configured to perform the air conditioning restart operation to allow the indoor temperature to reach the set temperature after elapse of the predicted restart time of the air conditioning operation.

11. A method for controlling an air conditioner, the method comprising:
collecting indoor environmental data;
collecting outdoor environmental data;
during an air conditioning operation in an eco mode, determining a recommended temperature based on the indoor environmental data, the outdoor environmental data, and a set temperature;
transmitting information about the recommended temperature to an external device based on an indoor temperature corresponding to the indoor environmental data reaching the set temperature;
changing the set temperature to the recommended temperature based on receiving a command to select the recommended temperature;
based on receiving a command to end the eco mode, determining a recommended operation duration of the air conditioning operation based on the indoor environmental data, the outdoor environmental data, the set temperature, and a desired restart time of the air conditioning operation after an end of the air conditioning operation, the desired restart time being set by a user; and
transmitting information about the recommended operation duration of the air conditioning operation to the external device.

12. The method of claim 11, wherein the determining of the recommended temperature based on the indoor environmental data, the outdoor environmental data, and the set temperature during the air conditioning operation in the eco mode comprises:
inputting the indoor environmental data, the outdoor environmental data, and data about the set temperature into a first machine learning model to determine the recommended temperature.

13. The method of claim 12, wherein the air conditioner comprises memory configured to store the indoor environmental data, the outdoor environmental data, and the data about the set temperature, and
wherein the first machine learning model is trained using the indoor environmental data, the outdoor environmental data, and the data about the set temperature stored in the memory as training data.

14. The method of claim 13, further comprising:
storing, by the memory, power consumption data of the air conditioning operation; and
determining, using a second machine learning model, an estimated power consumption reduction based on the set temperature being changed to the recommended temperature, compared to no change in the set temperature,
wherein the second machine learning model is trained using the power consumption data of the air conditioning operation stored in the memory as training data, and
wherein the information about the recommended temperature comprises information about the estimated power consumption reduction.

15. The method of claim 12, further comprising:
based on a reference power consumption being set by a user, changing the set temperature based on the indoor temperature reaching the set temperature and power consumption of the air conditioning operation being equal to or greater than the reference power consumption.
